# EUROPEAN PATENT SPECIFICATION

(11) **EP 2 592 542 B1**
(45) Date of publication and mention of the grant of the patent: **01.01.2020**
(21) Application number: 12192124.1
(22) Date of filing: 09.11.2012
(51) Int. Cl.: G06F 3/0488, G06F 3/0482, G06F 3/0481

(54) **User interface providing method and apparatus for mobile terminal**
Benutzerschnittstellenbereitstellungsverfahren und Vorrichtung für mobiles Endgerät
Procédé de fourniture d'interface utilisateur et appareil pour terminal mobile

(30) Priority: 10.11.2011 KR 20110116754
(43) Date of publication of application: 15.05.2013
(73) Proprietor: Samsung Electronics Co., Ltd., Gyeonggi-do 443-742 (KR)
(72) Inventor: Jeon, Hayoung, 443-742 Gyeonggi-do (KR); Yu, Seockhyun, 443-742 Gyeonggi-do (KR); Lee, Jaemyoung, 443-742 Gyeonggi-do (KR); Park, Hyunmi, 443-742 Gyeonggi-do (KR)
(74) Representative: HGF Limited

(56) References cited:
- WO-A1-98/45770
- KR-A- 20080 096 136
- US-A1- 2003 112 279
- US-A1- 2007 164 989
- US-A1- 2009 019 401
- US-A1- 2009 058 821
- US-A1- 2011 187 709

## Description

### BACKGROUND OF THE INVENTION

### Field of the Invention

The present invention relates generally to a user interface for a mobile terminal. More particularly, although not exclusively, the present invention relates to a user interface providing method and apparatus for a mobile terminal wherein items or objects can be displayed and managed using a virtual three dimensional space.

### Description of the Related Art

Rapid advances in communication and semiconductor technologies have enabled tremendous growth in the use of mobile terminals. With such widespread utilization, mobile terminals have become a necessity of modern life. In addition to regular voice and text communication functions, there are advanced mobile terminals that can support various functions related to, for example, mobile television such as DMB or DVB, music playback based on MP3, photographing, data communication, Internet access, and wireless short-range communication. As mobile terminals now support an ever-increasing number of different functions, there is a need in the art to develop a method that enables users to control the mobile terminals in a more rapid and convenient manner than known before. Particularly in recent years, as the number of mobile terminals having a touchscreen increases, a method is needed that enables better control of mobile terminals by means of touch interaction that is more convenient and provided in a more intuitive manner than known before.

A conventional mobile terminal provides a user interface (Ul) screen in a two-dimensional (2D) format. Such a user interface screen may provide only a flat area for item display and cannot provide an area for item management.

WO98/45770 discloses a system and method for converting a listed item of a popup menu into a drag-and-drop object, where the drag-and-drop object is dropped onto a receiving area and acquires new functionality based on the source of the item and on the nature of the receiving area.

### SUMMARY OF THE INVENTION

It is an aim of certain embodiments of the present invention to address, solve, mitigate or obviate, at least partly, at least one of the problems and/or disadvantages associated with the related art, including those described above. Certain embodiments aim to provide at least one of the advantages described below. The following embodiments are disclosed in order to fully understand the present invention which is defined by the appended claims. Embodiments not covered by the claims do not belong to the present invention.

Certain embodiments provide a user interface providing method and apparatus (and/or a method and apparatus for providing a user interface) for a mobile terminal wherein multiple items can be represented on a three dimensional (3D) screen, and the items are preferably managed, for example in a convenient manner, using a specific area of the 3D screen and functions related thereto for rapid execution.

In accordance with one aspect of the present invention, there is provided a method for providing an interface for a mobile terminal, which includes: displaying on a touchscreen of the mobile terminal, when an edit function is initiated from a home screen containing a plurality of items displayed on one or more pages, a three-dimensional user interface screen (3D UI screen) having a first region comprising an item display region for displaying items of the home screen and a second region for item management; and managing by a controller at least one item displayed in the second region, wherein the method further comprises moving an item displayed in the item display region to the second region in response to a touch input to the item, wherein the 3D UI screen is displayed in a 3D shape, the first region corresponding to a display of a first side, face or surface, or part thereof, of the 3D shape, and the second region corresponding to a display of a second side, face or surface, or part thereof, of the 3D shape, and wherein managing by the controller further comprises: stacking by the controller moved items into a pile for display in the second region; and changing a display of the items stacked in a pile to a display in a spread form, in response to a touch input on the second region.

In accordance with another aspect of the present invention, there is provided a mobile terminal, which preferably includes: a touchscreen configured to display, when an edit function is initiated from a home screen containing a plurality of items displayed on one or more pages, a three-dimensional user interface screen (3D UI screen) having a first region comprising an item display region for displaying items of the home screen and a second region for item management; and a control unit configured to control management of at least one item displayed in the second region, wherein the control unit is further configured to move an item displayed in the item display region to the second region in response to a touch input to the item, wherein the 3D UI screen is shaped as a 3D shape, the first region corresponding to a first side, face or surface, or part thereof, of the 3D shape, and the second region corresponding to a second side, face or surface, or part thereof, of the 3D shape, and wherein the control unit is further configured to stack moved items into a pile for display in the second region; and change a display of the items stacked in a pile to a display in a spread form, in response to a touch input on the second region.

Another aspect of the present invention provides a computer program comprising instructions arranged, when executed, to implement a method and/or apparatus in accordance with any one of the above-described aspects. A further aspect provides machine-readable storage storing such a program.

Other aspects, advantages, and salient features of the invention will become apparent to those skilled in the art from the following detailed description, which, taken in conjunction with the annexed drawings, disclose exemplary embodiments.

### BRIEF DESCRIPTION OF THE DRAWINGS

The above and other aspects, features and advantages of certain exemplary embodiments will become more apparent to a person of ordinary skill in the art from the following detailed description in conjunction with the accompanying drawings, in which:
FIG. 1 is a block diagram of a mobile terminal according to an exemplary embodiment of the present invention;
FIG. 2 is a flowchart of an interface providing method for a mobile terminal according to another exemplary embodiment of the present invention;
FIG. 3 illustrates an exemplary 3D UI screen of the present invention;
FIGS. 4A to 4C are exemplary illustrations of moving items present in an item display region to a drop table region within a 3D UI screen according to the present invention;
FIGS. 5A to 5C are exemplary illustrations of moving items enrolled in a drop table region to an item display region within a 3D UI screen according to the present invention;
FIGS. 6A to 6C illustrate exemplary execution of a function related with multiple items using a drop table region according to the present invention;
FIG. 7 is an exemplary illustration of item management using a 3D UI screen according to the present invention; and
FIG. 8 is another exemplary illustration of item management using a 3D UI screen according to the present invention.

### DETAILED DESCRIPTION

The following description of exemplary embodiments, with reference to the accompanying drawings, is provided to assist in a comprehensive understanding of the present invention, as defined by the claims. The description includes various specific details to assist in that understanding but these are to be regarded as merely exemplary. Accordingly, those of ordinary skill in the art will recognize that various changes and modifications of the embodiments described herein can be made without departing from the scope of the invention.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims.

The same or similar components may be designated by the same or similar reference numerals although they may be illustrated in different drawings. Detailed descriptions of structures, constructions, functions or processes known in the art may be omitted for clarity and conciseness, and to avoid obscuring the subject matter of the present invention.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, it is to be understood that the singular forms "a," "an," and "the" include plural referents unless the context clearly dictates otherwise. Thus, for example, reference to "an object" includes reference to one or more of such objects.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

In the present specification, the expression "mobile terminal" may refer to any device having a touchscreen, such as a personal digital assistant (PDA), a mobile communication terminal, a smartphone, a tablet computer, or a tabletop computer, just to name some non-limiting examples.

In embodiments of the present invention, a user interface (UI) screen is presented in a 3D format, and items can be conveniently managed using extra space created by 3D visualization. The 3D format or visualization may be realized on a 2D screen by defining a virtual 3D space which may be displayed on the screen. For example, the 3D UI screen may be presented in the form of a cylinder or a prism; one or more items may be displayed in a first region; and the items may be manipulated using a second region. Here, the first region may be a side (e.g. face) of a cylinder or a side of the prism and the second region may be a base thereof the respective cylinder or the prism.

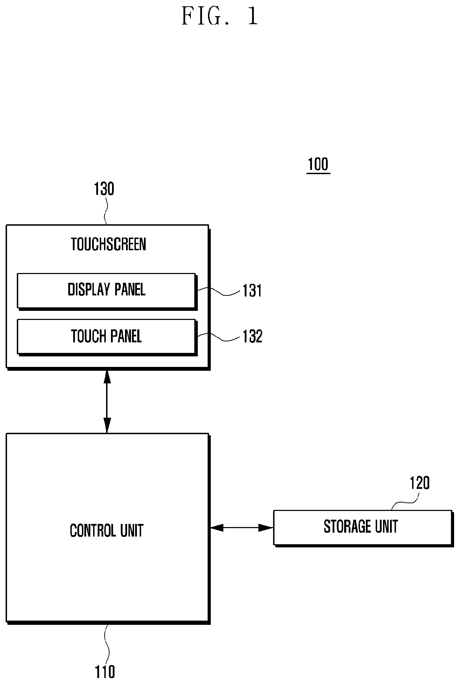

FIG. 1 is a block diagram of a mobile terminal 100 according to an exemplary embodiment of the present invention.

Referring now to FIG. 1, the mobile terminal 100 in this exemplary embodiment includes a touchscreen 130, a storage unit 120, and a control unit 110. In this embodiment, the touchscreen 130 includes a display panel 131 and a touch panel 132. the touchscreen may comprise a liquid crystal display. However, a person skilled in the art will understand and appreciate that any suitable thin-film technology screen can be used.

With continued reference to Fig. 1, the touchscreen 130 may perform an input function and a display function. To achieve this dual functionality, the touchscreen 130 of the exemplary embodiment illustrated in Figure 1 includes a display panel 131 and a touch panel 132.

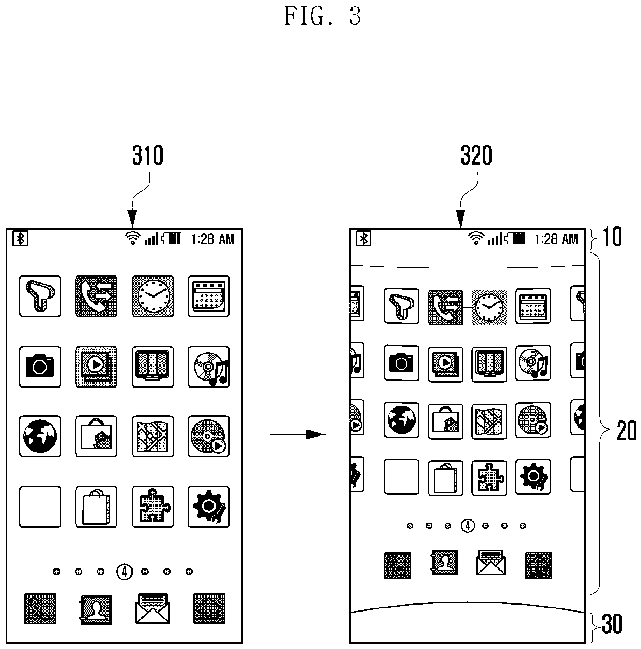

The display panel 131 displays, for example, various menus of the mobile terminal 100, information input by the user, and information to be provided to the user. For example, the display panel 131 may display various screens in the course of utilizing the mobile terminal 100, such as a home screen composed of multiple pages, a message composition screen and a call handling screen. In particular, the display panel 131 may display a 3D UI screen. Here, the 3D UI display screen may include a first region (e.g. an item display region) for displaying one or more items, and a second region (e.g. a drop table region) for managing or manipulating items. In certain embodiments of the present invention, items may be managed and/or manipulated using the second region, for example by performing a touch event, gesture or contact that occurs, at least partly, in the second region. Managing and/or manipulating items may include (but is not limited to) moving, copying, grouping, ungrouping, categorizing, adding, deleting and/or editing items. The skilled person will readily contemplate other examples of managing and manipulating items. The display panel 131 may provide various display screens for item management using the drop table region. The use of the drop table region is described in detail later with reference to FIGS. 3 to 8. The display panel 131 may be realized using liquid crystal display (LCD) devices, organic light emitting diodes (OLED), or active matrix organic light emitting diodes (AMOLED), just to name some non-limiting possible examples.

The touch panel 132 is placed on the display panel 131, and may generate a touch event, which indicates that contact has been sensed, in response to a touch gesture of the user with the finger (or a stylus or other suitable object) and send the touch event to the control unit 110. More specifically, the touch panel 132 may detect a touch event through a change in a physical quantity (such as capacitance or resistance) caused by contact between an object and the surface of the touch panel 132. The touch panel 132 sends information identifying the type of the touch event (e.g. a touch, touch release, tap, double touch, touch movement such as drag, flick or multitouch) and coordinates thereof to the control unit 110. As the operation and structure of touch panels 132 are known in the art, a detailed description thereof is omitted. In particular, the touch panel 132 may generate various control signals for manipulating items on the 3D UI screen, and send the control signals to the control unit 110. Here, the control signals may preferably include, for example, a request signal to move an item from the item display region to the drop table region, a request signal to move the item from the drop table region to the item display region, and/or a request signal to perform an operation (for example, delete, move or add-to-folder) on items present in the drop table region.

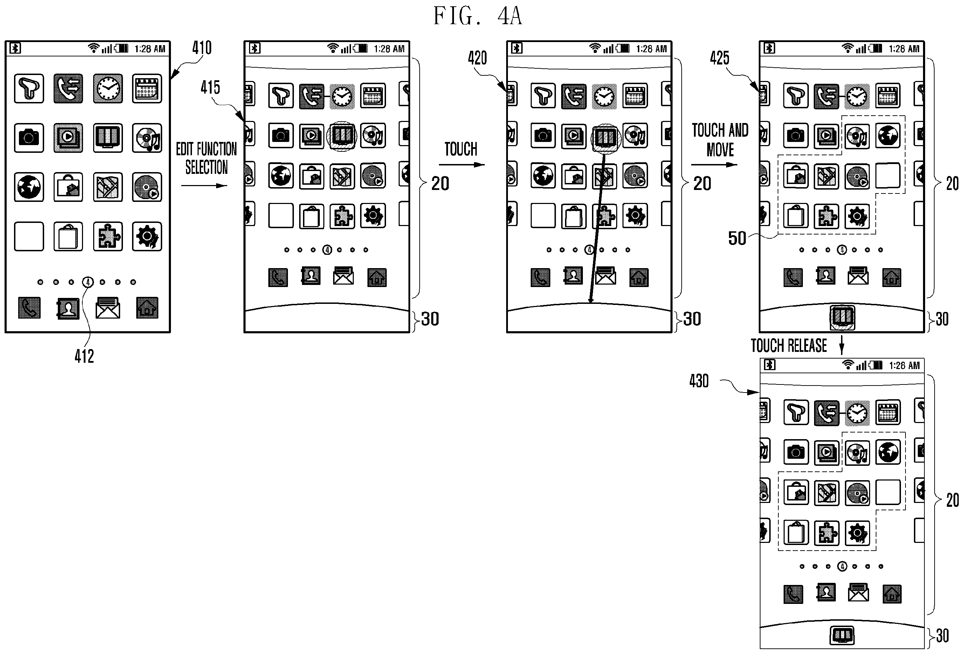

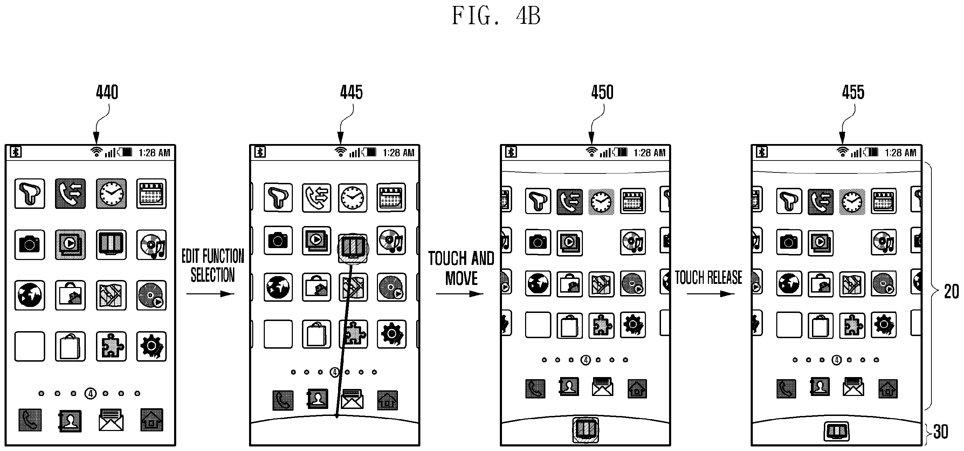

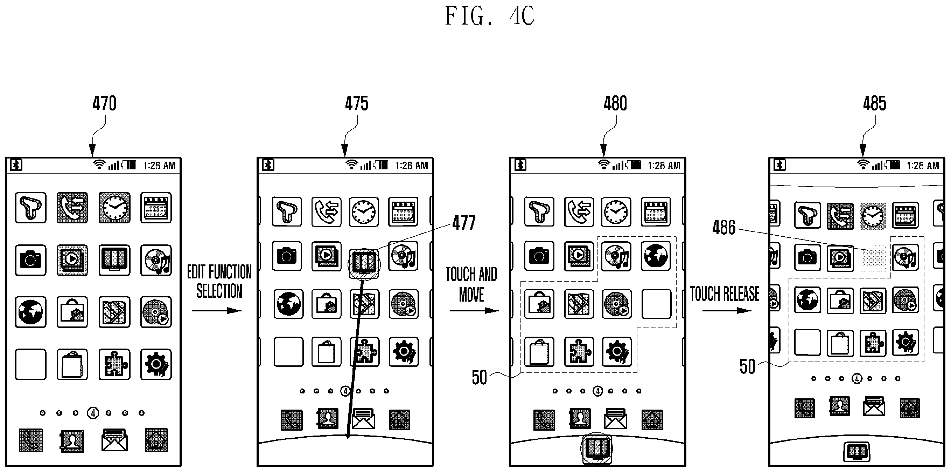

The storage unit 120, which may comprise a non-transitory machine readable medium, may store programs for realizing functions of the mobile terminal 100 and user data. For example, the storage unit 120 may store an operating system (OS) that is loaded into a processor or microprocessor and executed to boot and operate the mobile terminal 100, as well as other application programs related to images, sounds and short-range wireless communication to support optional functions of the mobile terminal 100, and various content items, just to name a few possible examples. The storage unit 120 may store key maps and menu maps for proper operation of the touchscreen 130. The key maps may correspond to various keyboard layouts including but in no way limited to 3*4 and/or QWERTY layouts, and may include a control key map for controlling execution of an active application program. The menu maps may be associated with various functions, and may include a menu map for controlling execution of an active application program or programs. In particular, the storage unit 120 may store an item management program that controls a process for outputting a 3D UI screen and manipulating items through the drop table region of the 3D UI screen. The item management program may also control item manipulation operations such as move, delete and empty (described later with reference to FIGS. 4 to 8).

The storage unit 120 stores path information related to item movement. For example, the storage unit 120 may keep track of previous locations (e.g. in the item display region) of items that are moved (e.g. to the drop table region). This keeping track of various locations enables moving multiple items in the drop table region back to their original locations in the item display region.

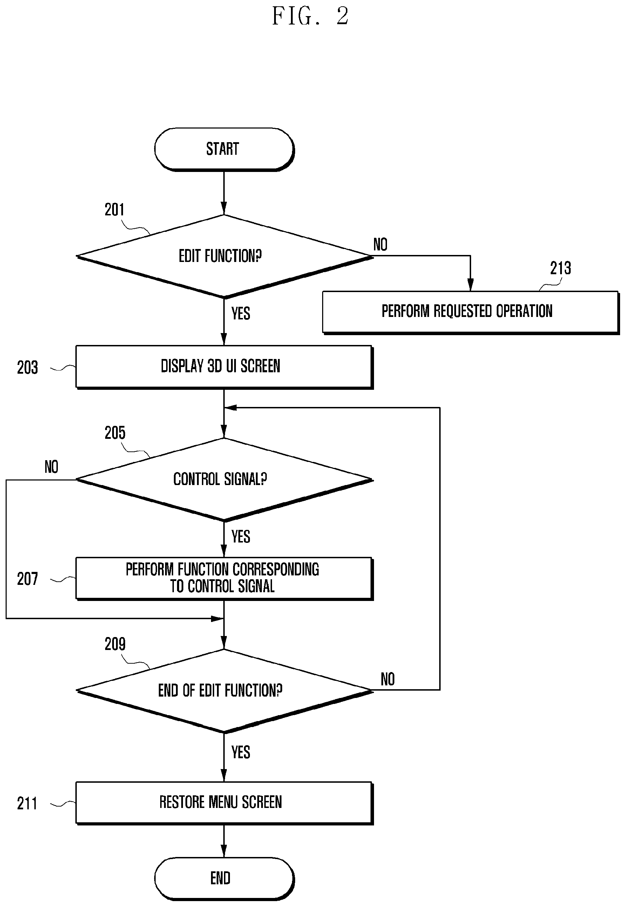

The control unit 110, which may comprise hardware such as a processor or microprocessor configured for control of various functionality of the mobile terminal 100, may control the overall operation of the mobile terminal 100 and control signal exchange between internal components thereof. In particular, the control unit 110 may provide a 3D UI screen, which includes an item display region for the display of one or more items and the display of a drop table region to manage items. The control unit 110 may control a process of managing items and performing operations on items using the drop table region of the 3D UI screen. Operations of the control unit 110 are described in more detail with subsequent reference to FIGS. 2 to 8.

Although not shown in FIG. 1, the mobile terminal 100 may further include other hardware units such as a camera module for capturing still or moving images, a digital broadcast receiving module for receiving digital broadcasts, a digital music player such as an MP3 module, and a proximity sensor module for proximity sensing. With the continued trend in the digital convergence of previously separate electronic apparatuses into a single unit such as a mobile terminal, those skilled in the art will understand and appreciate that the mobile terminal 100 may further include other units comparable to the above-described units, or to provide functionality not specifically discussed hereinabove, and one or more units thereof may be removed or replaced with other units.

FIG. 2 is a flowchart illustrating exemplary operation of an interface providing method for a mobile terminal according to another exemplary embodiment of the present invention, and FIG. 3 illustrates an example of a 3D UI screen in an embodiment of the present invention.

Referring now to FIG. 2, at step 201 the control unit 110 of the mobile terminal checks whether an edit function for item management is selected from a menu screen containing a plurality of items. When at step 213 the edit function is not selected, the control unit 110 may perform a requested operation. For example, the control unit 110 may perform a function at step 213 (for example, music playback or Internet access) associated with an item selected (or touched) by the user from the items contained in the menu screen, or may remain at step 201.

However, when at step 201 the edit function is selected, then at step 203 the control unit 110 controls the touchscreen 130 to display an edit screen in a 3D format, that is, a 3D UI screen. For example, referring to FIG. 3, when the edit function is selected from a 2D menu screen indicated by screen reference numeral 310, the touchscreen 130 may output a 3D UI screen as indicated by screen reference numeral 320 under control of the control unit 110.

More specifically with reference to FIG. 3, the 3D UI screen may include an indicator region 10 for displaying indictors for remaining battery power, current time and received signal strength, an item display region 20 for displaying multiple items, and a drop table region 30 for managing items, which in this particular example happens to be located at the bottom of the screen. The item display region 20 may include a page zone, which may be movable in left and right directions (rotatable), and used to display multiple items, and a fixed zone in which fixed items, such as a call item, contact item, text-message item and home-screen item, are displayed.

The 3D UI screen may be displayed in the shape of a cylinder, as indicated by screen reference numeral 320. The 3D UI screen may also take many other various shapes. For example, the 3D UI screen may take the shape of a prism. In other words, the 3D UI screen may be presented in the form of a 3D shape, such as a cylinder or a prism, as two non-limiting possible shapes. Items may be displayed, for example, on a first side, face or surface, or part thereof, of the 3D shape, such as a first side of the cylinder or prism and a second side, face or surface, or part thereof, of the 3D shape, such as the base of the cylinder or prism, may be allocated as the drop table region 30.

With reference to FIG. 2, at step 205 the control unit 110 checks whether a control signal for item management has been input. When at step 205 a control signal for item management is not input, the control unit 110 performs step 209. When a control signal for item management is input, then at step 207 the control unit 110 performs an operation according to the input control signal. For example, according to the input control signal, the control unit 110 controls the movement of items present in the item display region 20 to the drop table region 30, or controls the movement of items present in the drop table region 30 to the item display region 20. The control unit 110 may delete multiple items present in the drop table region 30 or return them to their original locations. The control unit 110 may add a folder in the item display region 20 and move multiple items present in the drop table region 30 to the new folder. The control unit 110 may change an item arrangement in the drop table region 30 by spreading stacked items into multiple rows and/or columns, or stacking spread items into a pile. This change in arrangement will be described in more detail in connection with the description of FIGS. 4 to 8.

At step 209, the control unit 110 checks whether the edit function is ended. When the edit function is not ended, the control unit 110 performs step 205. When the edit function is ended, then at step 211 the control unit 110 may restore the menu screen.

In the above-described exemplary embodiment, a 3D UI screen is output when an edit function is selected in a 2D menu screen. However, the present invention is not limited thereto. For example, the menu screen itself may be presented in a 3D format so that the drop table region can be used without execution of the edit function. In the above description of the operation of the process in FIG. 2, a menu screen is edited. However, the present invention is not limited to the aforementioned. For example, the home screen, which contains frequently used menu items of the mobile terminal 100, may also be edited.

In the above-described exemplary embodiment, the lower base of a cylinder or prism is used as the drop table region. However, the present invention is not limited thereto. For example, the upper base of a cylinder or prism may be used as the drop table region, or both the lower and upper bases thereof may also be used as the drop table region. In addition, the indicator region 10 may be not included in the 3D UI screen according to design or desire. In other words, the 3D UI screen may be composed of the item display region 20 and the drop table region 30. Any type of geometric shapes can be used, which can be contiguous or non-contiguous.

FIGS. 4A to 4C are exemplary illustrations of moving items present in the item display region to the drop table region within a 3D UI screen.

Referring now to FIG. 4A, in response to an input signal for menu screen output, the control unit 110 preferably controls the touchscreen 130 to display a menu screen as indicated by screen reference numeral 410. Here, the menu screen 410 is shown in a 2D format and may be composed of multiple pages, and many items may be arranged in multiple rows and columns in each page. Screen reference numeral 410 indicates at 412 that the menu screen is composed of seven pages and the fourth page is currently displayed based on the horizontal row of 7 items directly above the drop table region.

When an edit function is selected in a state in which the menu screen is output, the control unit 110 preferably controls the touchscreen 130 to output a 3D UI screen as indicated by screen reference numeral 415. The 3D UI screen 320 has been previously-described in connection with FIG. 3. With regard to FIG. 4, the user may touch at least one item in the item display region 20 of the 3D UI screen as indicated by screen reference numeral 420, move the touched item toward the drop table region 30 as indicated by screen reference numeral 425, and release the touched item in the drop table region 30. Next, the control unit 110 may control the touchscreen 130 to enroll the moved item in the drop table region 30 as indicated by screen reference numeral 430. Here, the control unit 110 may rearrange items present in the item display region 20 as indicated by screen reference numeral 430. In other words, the control unit 110 may fill the position of the moved item by shifting subsequent items of the moved item.

Referring now to FIG. 4B, in response to an input signal for a menu screen output, the control unit 110 may control the touchscreen 130 to output a menu screen as indicated by screen reference numeral 440. Here, the menu screen shown is the same or similar as previously-described above.

When an edit function is selected in a state in which the menu screen is already output on the display, the control unit 110 can control the touchscreen 130 to output a 3D UI screen as indicated by screen reference numeral 445. Thus the display of the screen changes from 2D to 3D upon the edit function selection. The display may sense touch (contact) by at least one item in the item display region 20 of the 3D UI screen as indicated by screen reference numeral 445, and move the touched item toward the drop table region 30 as indicated by screen reference numeral 450, and then release the touched item in the drop table region 30. The control unit 110 may then control the touchscreen 130 to enroll the moved item in the drop table region 30 as indicated by screen reference numeral 455. Here, the control unit 110 may leave the position of the moved item empty without shifting other items as indicated by screen reference numerals 450 or 455.

Referring now to FIG. 4C, in response to an input signal for a menu screen output, the control unit 110 controls the touchscreen 130 to output a menu screen as indicated by screen reference numeral 470. When an edit function is selected in a state in which the menu screen is already being output, the control unit 110 may control the touchscreen 130 to output a 3D UI screen as indicated by screen reference numeral 475. The touchscreen may detect contact with at least one item on the item display region 20 of the 3D UI screen as indicated by screen reference numeral 475, and move the touched item toward the drop table region 30 as indicated by screen reference numeral 480. Here, the control unit 110 may fill the position of the moved item by shifting subsequent items 50 of the moved item as indicated by screen reference numeral 480.

When the user releases the touched item in the drop table region 30, as indicated by screen reference numeral 485, the control unit 110 may control the touchscreen 130 to enroll the moved item in the drop table region 30 and to display a distinctive ghost image 486 at the previous position of the moved item in the item display region 20. Here, the ghost image 486 may be obtained by modifying a characteristic, such as at least one of the size, transparency and color, of the item having been moved to the drop table region 30. For example, as indicated by screen reference numeral 485, a translucent ghost image 486 is displayed at the previous position of the item having been moved to the drop table region 30. A ghost image 486 indicates existence of a corresponding item having been moved to the drop table region 30 and reminds the user of the original position of the item now in the drop table region. When a ghost image with a different characteristic, such as size, transparency or color, is displayed at the original position of the item having been moved to the drop table region 30, the control unit 110 may shift the subsequent items 50 of the moved item back to their original positions as indicated by screen reference numeral 485.

Hereinabove, a description is given of examples for moving items present in the item display region 20 to the drop table region 30. Next, a description is given of examples for moving items present in the drop table region 30 to the item display region 20.

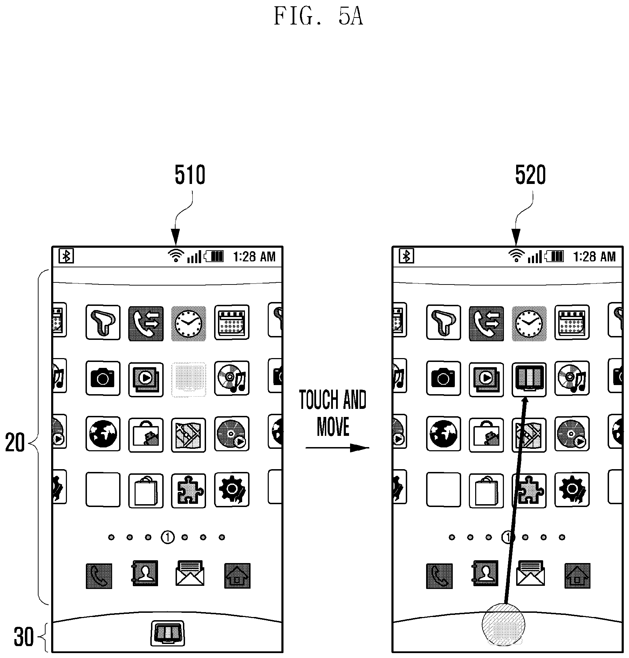

FIGS. 5A to 5C are illustrations of moving items enrolled in the drop table region to the item display region (i.e. back to item display region from the drop table region) within a 3D UI screen.

Referring to FIG. 5A, the control unit 110 (shown in FIG. 1) is configured to control the touchscreen 130 to display a 3D UI screen as indicated by screen reference numeral 510. The user may touch one item enrolled in the drop table region 30 of the 3D UI screen, move the touched item to a desired position of the item display region 20, and release the touched item as indicated by screen reference numeral 520. Then, the control unit 110 may move the touched item in the drop table region 30 to the touch release position. Here, when multiple items are stacked in the drop table region 30, the control unit 110 may control the move of the topmost one of the stacked items to the touch release position. In this way, the user may move a specific item present in the drop table region 30 to a desired position in the item display region 20 through touch, touch and movement, and touch release. Although not shown in FIG. 5A, the user may move an item present in the drop table region 30 to a page other than the current page (fourth page in the screen indicated by screen reference numeral 510) by entering or inputting a sweep interaction or gesture in the left or right direction on the item display region 20.

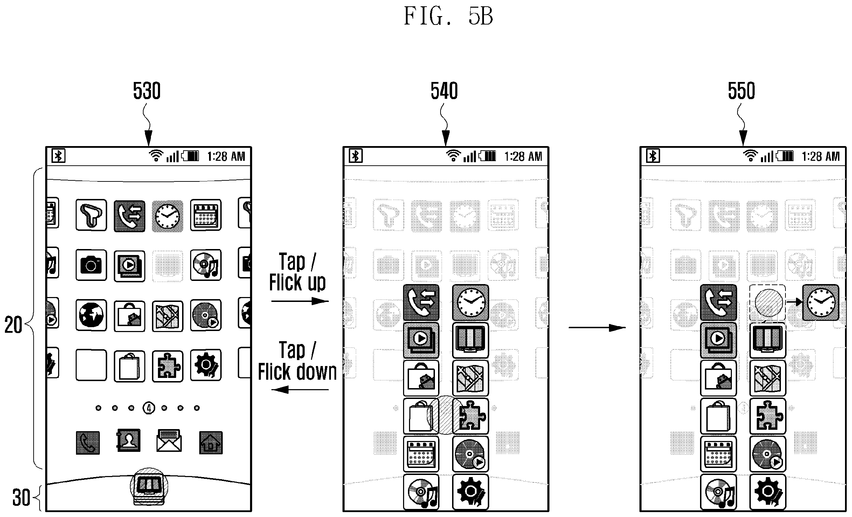

Referring now to FIG. 5B, the control unit 110 may be configured to control the touchscreen 130 to display a 3D UI screen as indicated by screen reference numeral 530. Here, many items are enrolled in the drop table region 30 of the 3D UI screen. When the user enters a tap on the items in the drop table region 30 of the screen reference numeral 530, the control unit 110 may arrange the items in multiple rows and columns as indicated by screen reference numeral 540. Here, in the illustrated exemplary embodiment, as indicated by screen reference numeral 540, twelve items are enrolled in the drop table region 30.

The mobile terminal may detect: (1) a touch of a desired one of the items displayed on the touchscreen and arranged in multiple rows and columns; (2) a move (e.g. drag, flick or sweep) of the touched item in a given direction in the item display region 20, and a release of the touched item. Then, the control unit 110 may control movement of the touched item to the previous position (e.g. marked by the ghost image 486) or to an empty position of the current page. When there is no empty position in the current page, the control unit 110 may control movement of the touched item to an empty position of the next page. When there is no empty position until the last page, the control unit 110 may add a new page and move the touched item to the new page.

When the touchscreen detects a tap on one of the items arranged in multiple rows and columns as indicated by screen reference numeral 540, the control unit 110 may control stack the spread items into a pile as indicated by screen reference numeral 530 (return to the previous item arrangement). In this case, the item arrangement is switched according to tap events. In another exemplary embodiment, the item arrangement on the touchscreen may be switched according to touch movement events or other type of gesture. For example, multiple items stacked in a pile may be spread into multiple rows and/or columns according to a flick up, and multiple items spread in multiple rows and columns may be stacked in a pile according to a flick down.

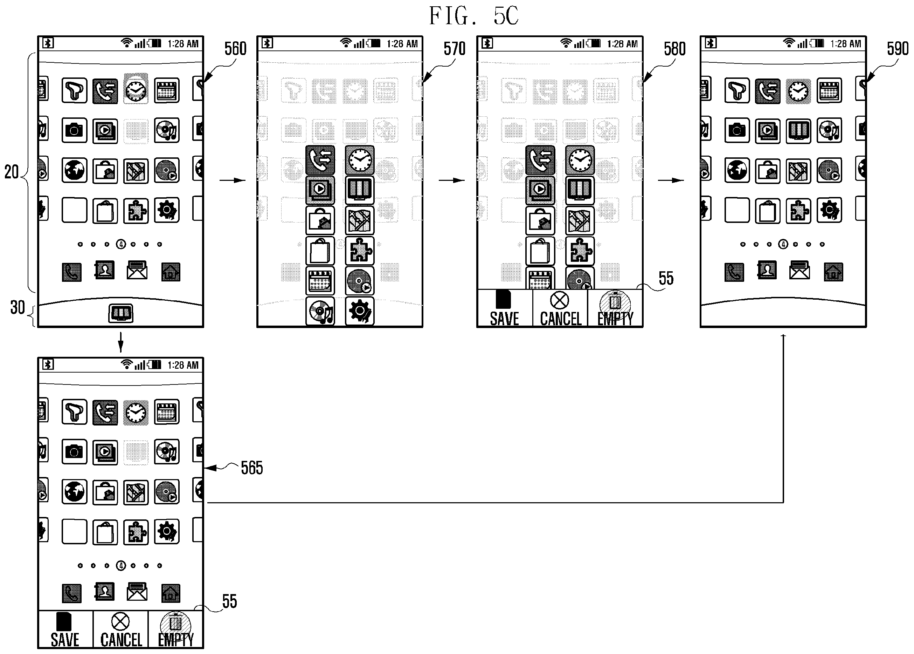

Referring now to FIG. 5C, the control unit 110 may control the touchscreen 130 to display a 3D UI screen as indicated by screen reference numeral 560. Here, many items are enrolled in the drop table region 30 of the 3D UI screen. When the user enters a tap on the items in the drop table region 30, the control unit 110 may arrange the items in multiple rows and/or columns as indicated by screen reference numeral 570. When the user enters a separate menu key (not shown), the control unit 110 (shown in FIG. 1) may control the output of a menu window 55 containing currently available command options at a portion of the touchscreen 130 as indicated by screen reference numeral 580. Here, the menu window 55 may include options such as "save" (to store edited results), "cancel" (to discard edited results), and "empty" (to empty the drop table region 30). In a state indicated by screen reference numeral 560, when the user enters a separate menu key (not shown), the control unit 110 may output a menu window 55 containing currently available command options at a portion of the touchscreen 130 as indicated by screen reference numeral 565.

In a state indicated by screen reference numerals 565 or 580, when the user selects "empty" option, the control unit 110 may move all the items present in the drop table region 30 to the item display region 20 as indicated by screen reference numeral 590. Here, for items whose previous positions are remembered, the control unit 110 may move the items to their previous positions (for example, positions marked by ghost images). For items whose previous positions are not remembered (unknown), the control unit 110 may move the items to empty positions of the current page. When there is no empty position in the current page, the control unit 110 may move the item to an empty position of the next page. When there is no empty position up to and including the last page, the control unit 110 may add a new page and move the item to the new page.

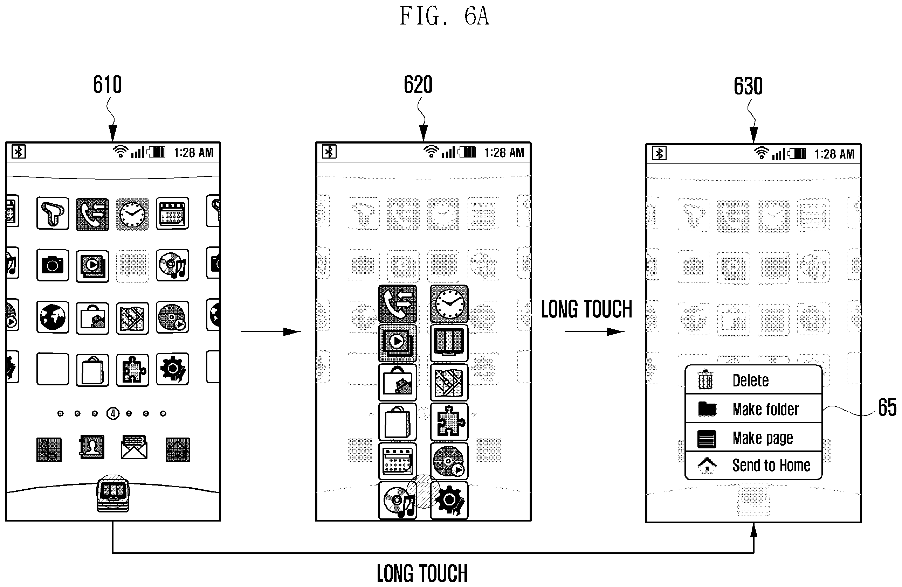

FIGS. 6A to 6C illustrate execution of a function related with multiple items using the drop table region.

Referring now to FIGS. 6A to 6C, the control unit 110 may control the touchscreen 130 (FIG. 1) to display a 3D UI screen as indicated by screen reference numeral 610. Here, many items are enrolled in the drop table region 30 of the 3D UI screen. When the touchscreen detects that the user has entered a tap or other predetermined gesture on the items in the drop table region 30, the control unit 110 may arrange the items in multiple rows and/or columns as indicated by screen reference numeral 620. When the user enters a long touch (touch sustained for a given time or longer) or other predetermined gesture at a portion of the items arranged in multiple rows and/or columns, the control unit 110 may control the display to output a menu popup window 65 containing command options applicable to multiple items as indicated by screen reference numeral 630. Here, the menu popup window 65 may include options, such as "delete" (to delete items in the drop table region 30), "make folder" (to create a folder at the item display region 20 and to move items in the drop table region 30 to the created folder), "make page" (to add a page in the item display region 20 and to move items in the drop table region 30 to the added page), and "send to home" (to move items in the drop table region 30 to the home screen).

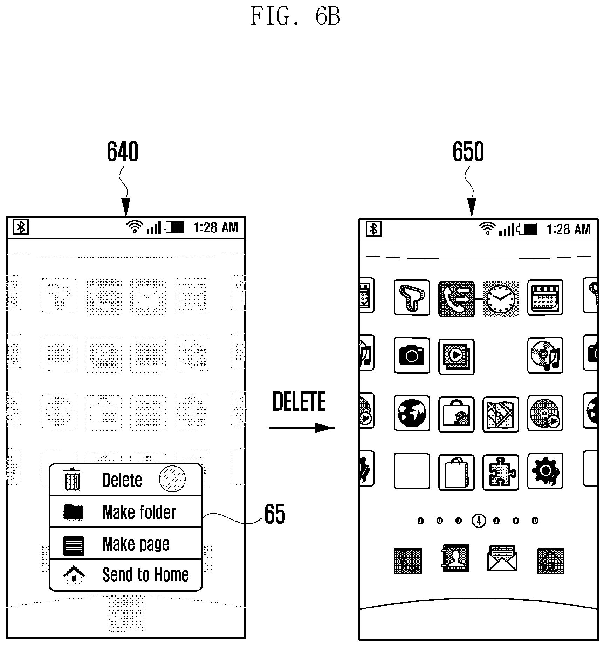

As indicated by screen reference numeral 640 in FIG. 6B, the user may select "delete" option of the menu popup window 65 by entering a tap or other predetermined gesture. The touchscreen detects the tap, and then, the control unit 110 may delete multiple items in the drop table region 30. Here, deletion of the multiple items may correspond, for example, to removal of applications associated with the items. After deletion, as indicated by screen reference numeral 650, no item remains in the drop table region 30 and no ghost image remains in the item display region 20.

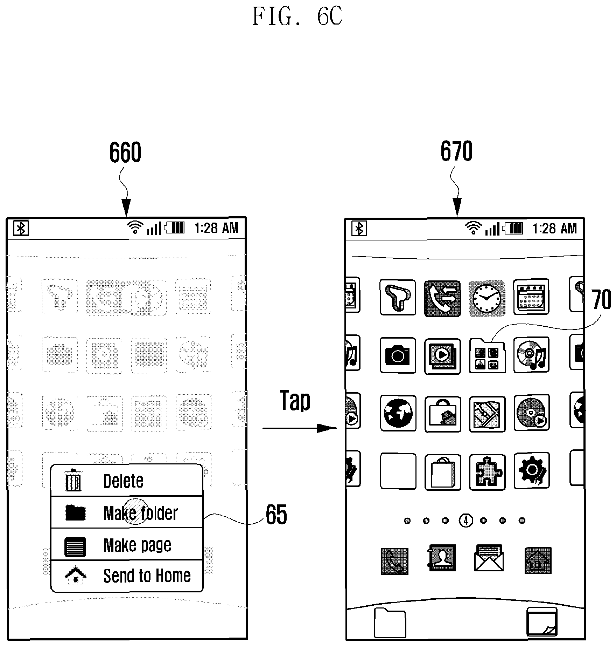

As indicated by screen reference numeral 660 in FIG. 6C, the user may select the "make folder" option of the menu popup window 65 by entering a tap or other predetermined gesture. Then, upon the touchscreen detecting the tap, the control unit 110 can be configured to create a folder 70 at the position of a ghost image and move the display of the items in the drop table region 30 to the created folder 70 as indicated by screen reference numeral 670. Here, to indicate the presence of at least one item, the folder 70 may include small images representing contained items.

With continued reference to FIG. 6C, similar to the above, when the user selects the "make page" option of the menu popup window 65 by entering a tap, the touchscreen detects the tap and the control unit 110 adds a page after the current page and move the items in the drop table region 30 to the added page. When the user selects "send to home" option of the menu popup window 65 by entering a tap or other predetermined gesture, the control unit 110 may move the items in the drop table region 30 to the home screen. Here, the control unit 110 may move the items to empty positions of the home screen. For example, the topmost one of the items in the drop table region 30 (e.g. item management region) is moved to the first empty position, and the second topmost item is moved to the second empty position, and so on. When there are not enough empty positions in the home screen, the control unit 110 may add a page to the home screen.

As described above, in the present invention, an operation such as the "delete", "make folder" or "make page" operations may be applied commonly to multiple items present in the drop table region 30, enhancing user convenience. For example, to delete or move multiple items, the user does not have to enter the same command or gesture multiple times.

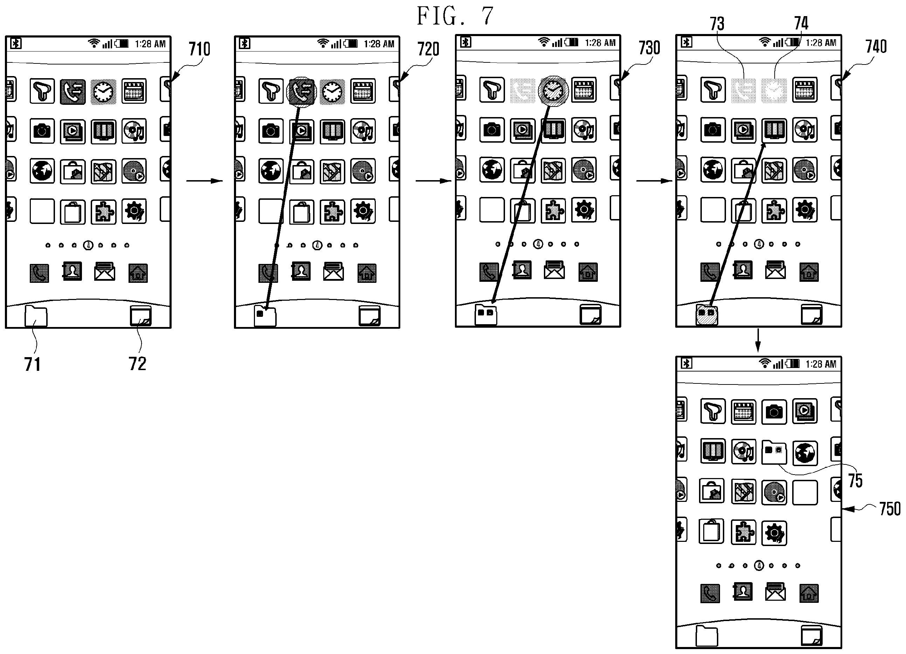

FIG. 7 is an exemplary illustration of item management using a 3D UI screen.

Referring now to FIG. 7, the control unit 110 may control the touchscreen 130 to output a 3D UI screen as indicated by screen reference numeral 710. The 3D UI screen may include an indicator region 10, an item display region 20, and a drop table region 30.

As the indicator region 10 and the item display region 20 are used similarly as in the previous exemplary embodiments, a description thereof is omitted. Unlike the previous exemplary embodiments, the drop table region 30 may include a make-folder item 71 and a make-page item 72. Here, the make-folder item 71 is associated with "make folder" function described in connection with FIG. 6C, and the make-page item 72 is associated with a "make page" function.

In a state indicated by screen reference numeral 710, the user may move an item in the item display region 20 to the make-folder item 71 as indicated by screen reference numeral 720 or 730. Then, the control unit 110 may control the touchscreen 130 to display a distinctive ghost image (different from the corresponding item in terms of a characteristic such as at least one of size, transparency and color) at the previous position of the item having moved to the make-folder item 71.

The user may touch the make-folder item 71, move the make-folder item 71 to a desired position of the item display region 20, and release the make-folder item 71 as indicated by screen reference numeral 740. Then, the control unit 110 may create a folder 75 at the touch release position and move the items in the make-folder item 71 to the created folder 75 as indicated by screen reference numeral 750. Here, the make-folder item 71 may become empty, and the ghost images 73 and 74 may be removed. As described above, the "make folder" function may be more easily performed using the make-folder item 71 in comparison to using the menu popup window 65 as in FIG. 6C.

Although not shown in FIG. 7, to move one item individually, the user may enter a tap or other predetermined gesture on the make-folder item 71, and the control unit 110 is preferably configured to expand the make-folder item 71 into a popup window. Thereafter, the user may select a desired item in the popup window and move the selected item to the item display region 20.

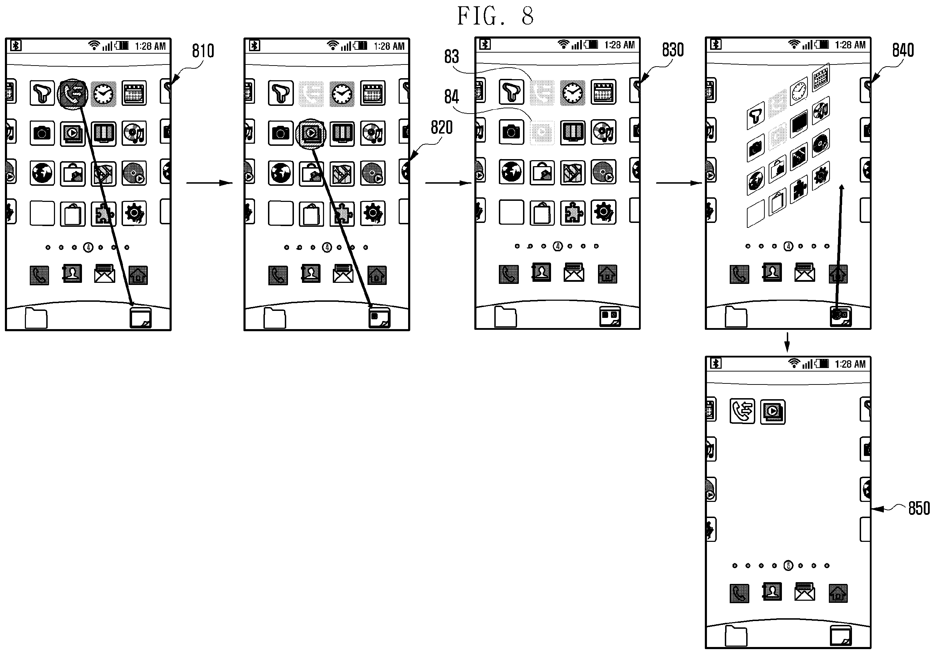

FIG. 8 is another illustration of item management using a 3D UI screen.

Referring now to FIG. 8, the control unit 110 may control the touchscreen 130 to output a 3D UI screen as indicated by screen reference numeral 810. The user may move an item in the item display region 20 to the make-page item 72 as indicated by screen reference numeral 810 or 820. Then, the control unit 110 may control the touchscreen 130 to display a distinctive ghost image 83, 84 at the previous position of the item having moved to the make-page item 72 as indicated by screen reference numeral 810.

The user may touch the make-page item 72, move the make-page item 72 to a desired position of the item display region 20, and release the make-page item 72 as indicated by screen reference numeral 840. Here, the touch release position may be in between pages. Then, the control unit 110 may produce a visual effect (for example, tilting the current page) to notify the user of page insertion as indicated by screen reference numeral 840.

After touch release, the control unit 110 may add a page at the touch release position and move the items in the make-page item 72 to the added page as indicated by screen reference numeral 850.

As described above, the "make page" function may be more easily performed using the make-page item 72. Although not shown in FIG. 8, to move one item individually, the user may enter a tap or other predetermined gesture on the make-page item 72 that is detected by the touchscreen, and the control unit 110 may expand the make-page item 72 into a popup window. Thereafter, the user may select a desired item in the popup window and move the selected item to the item display region 20.

In another exemplary embodiment, the space between the make-folder item 71 and the make-page item 72 may be utilized as a region for stacking items as described in connection with FIGS. 3A to 6C.

According to an exemplary aspect of the present invention, the interface providing method and apparatus enable a mobile terminal to present a UI screen in a 3D format. Hence, the contents of the UI screen may be readily understood as contents of the UI screen. Extra space obtained by 3D visualization (e.g. using a virtual 3D space) in the UI screen can be used as an area for item management and execution of functions related to items. In other words, the extra space may be used to execute functions in a simple way, which would be executed through complicated steps in a regular 2D UI screen, thereby enhancing user convenience.

For example, one or more items may be kept in the extra space and may be invoked as necessary. In addition, multiple items present in the extra space may be simultaneously deleted or simultaneously moved to their original positions in the 3D UI screen.

It will be appreciated that embodiments of the present invention can be implemented in the form of hardware, firmware, software or any combination of hardware, firmware or software. Any such software, for example in the form of machine executable computer code, may be loaded into hardware such as a processor or microprocessor and executed. The software may be stored on a volatile or non-volatile storage device or recording medium, whether erasable or rewritable or not, such as a CD, a DVD, a Blu-ray disk, a floppy disk, a hard disk, magnetic tape, any other optical and/or magnetically readable medium, , a ROM, a RAM, a memory chip, a memory device or an integrated circuit, and the like. The software, or part thereof, may be downloaded over a network, having been originally stored on a remote recording medium or a non-transitory machine readable medium, and may be stored on a local recording non-transitory medium.

Embodiments of the present invention described herein can be rendered in such software or computer code that is stored on a recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, thumbnail, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing described herein. A controller or control unit configured to perform a function as described herein includes hardware and is not to be construed as software per se.

It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

While the present invention, providing a user interface providing method and apparatus for a mobile terminal, has been described in detail with reference to certain exemplary embodiments thereof, it will be understood by those skilled in the art that many variations and modifications may be made therein without departing from the scope of the present invention, as defined by the appended claims.

## Claims

1. A user interface providing method for a mobile terminal (100), comprising:
displaying on a touchscreen (130) of the mobile terminal (100), when an edit function is initiated from a home screen containing a plurality of items displayed on one or more pages, a three-dimensional user interface screen, 3D UI screen, having a first region comprising an item display region (20) for displaying items of the home screen and a second region for item management; and
managing by a controller at least one item displayed in the second region, wherein the method further comprises
moving an item displayed in the item display region (20) to the second region in response to a touch input to the item, wherein the 3D UI screen is displayed in a 3D shape, the first region corresponding to a display of a first side, face or surface, or part thereof, of the 3D shape, and the second region corresponding to a display of a second side, face or surface, or part thereof, of the 3D shape, and wherein managing by the controller further comprises:
stacking by the controller moved items into a pile for display in the second region; and
changing a display of the items stacked in a pile to a display in a spread form, in response to a touch input on the second region.

2. The user interface providing method of claim 1, wherein moving items from the item display region (20) to the second region includes displaying ghost images corresponding to the moved items at previously displayed positions of the moved items, wherein each ghost image is distinguished from the respective corresponding item that has been moved in terms of at least one characteristic, e.g. size, color, and/or transparency, so that said each ghost image is readily distinguishable from neighboring items in the item display region (20).

3. The user interface providing method of claim 1 or 2, wherein managing at least one item by the controller further comprises at least one of:
moving a display of a topmost one of the items stacked in the second region to the item display region (20) by detecting a contact on a touchscreen at a position corresponding to the stacked items, in which the topmost item is moved to a desired position of the item display region (20) by detecting a release of contact on the touchscreen corresponding to said topmost one of the items;
displaying the items stacked in the second region in a spread form when the touchscreen detects tapping of the second region, a selecting one of the items in a spread form, and moving of the selected item to the item display region (20); and
moving a display of all the items stacked on the second region to the item display region (20) in response to a first, e.g. "empty", command.

4. The user interface providing method of claim 3, wherein moving all the items stacked on the second region comprises:
moving a display of items from the second region whose previous positions in the item display region (20) are known back to their previous positions in the item display region (20);
moving the display of items in the second region whose previous positions in the item display region (20) are unknown to empty positions in the item display region (20); and
adding, when there are no empty positions in the first region, a page, and moving the display of items in the second region to the added page.

5. The user interface providing method of any preceding claim, wherein managing at least one item by the controller comprises
removing, in response to a second, e.g. "delete", command, applications associated with at least one item in the second region;
creating, in response to a third, e.g. "make folder", command, a folder in the first region, and moving a display of all the items in the second region to the created folder in the first region; and
adding, in response to a fourth, e.g. "make page", command, a page at the first region, and moving a display of all the items in the second region to the added page.

6. The user interface providing method of any preceding claim, wherein the second region contains a first, e.g. "make-folder", item associated with a first, e.g. "make folder", function and a second, e.g. "make-page", item associated with a second, "e.g. make page", function.

7. A mobile terminal (100) for providing a user interface, comprising:
a touchscreen (130) configured to display, when an edit function is initiated from a home screen containing a plurality of items displayed on one or more pages, a three-dimensional user interface screen, 3D UI screen, having a first region comprising an item display region (20) for displaying items of the home screen and a second region for item management; and
a control unit (110) configured to control management of at least one item displayed in the second region, wherein the control unit is further configured to move an item displayed in the item display region (20) to the second region in response to a touch input to the item, wherein the 3D UI screen is shaped as a 3D shape, the first region corresponding to a first side, face or surface, or part thereof, of the 3D shape, and the second region corresponding to a second side, face or surface, or part thereof, of the 3D shape, and wherein the control unit is further configured to
stack moved items into a pile for display in the second region; and
change a display of the items stacked in a pile to a display in a spread form, in response to a touch input on the second region.

8. The mobile terminal (100) of claim 7, wherein the second region contains a first, e.g. "make-folder", item associated with a first, e.g. "make folder", function configured in the control unit and a second, e.g. make-page, item associated with a second, e.g. "make page", function.

9. The mobile terminal (100) of claim 7 or 8, wherein the control unit is configured to control, when an item displayed in the first region is moved to the second region, the touchscreen to display a ghost image corresponding to the moved item at a previous position of the moved item, wherein the ghost image is distinguished from the corresponding moved item in terms of at least one characteristic, e.g. size, color, and/or transparency, in which the ghost image is readily distinguishable from neighboring items being displayed.

10. The mobile terminal of claim 7, wherein the control unit (110) is configured to:
move a display of items in the second region whose previous positions in the first region are known, back to their previous positions,
move a display of items in the second region whose previous positions in the first region are unknown to empty positions in the first region for display, and
add, when there is no empty position in the first region, a page and moves a display of items in the second region to the added page.

11. The mobile terminal (100) of any of claims 7 to 10, wherein the control unit (110) is configured to:
remove, in response to a first, e.g. "delete", command, a display of applications associated with at least one item in the second region,
create, in response to a second, e.g. "make folder", command, a folder at the first region, and moves a display of all items in the second region to the created folder, and
add, in response to a third, e.g. "make page", command, a page at the first region, and moves display of all items in the second region to the added page.

## Patentansprüche

1. Verfahren zum Bereitstellen einer Benutzerschnittstelle für ein mobiles Endgerät (100), umfassend:
Anzeigen auf einem Berührungsbildschirm (130) des mobilen Endgeräts (100), wenn eine Bearbeitungsfunktion von einem Startbildschirm initiiert wird, der eine Vielzahl von Elementen enthält, die auf einer oder mehreren Seiten angezeigt wird, eines dreidimensionalen Benutzerschnittstellenbildschirms, 3D-UI-Bildschirms, der eine erste Region, die eine Elementanzeigeregion (20) zum Anzeigen von Elementen des Startbildschirms umfasst, und eine zweite Region zur Elementverwaltung aufweist; und
Verwalten durch eine Steuerung von zumindest einem Element, das in der zweiten Region angezeigt wird, wobei das Verfahren ferner Folgendes umfasst:
Bewegen eines Elements, das in der Elementanzeigeregion (20) angezeigt wird, zu der zweiten Region als Reaktion auf eine Berührungseingabe an das Element, wobei der 3D-UI-Bildschirm in einer 3D-Form angezeigt wird, wobei die erste Region einer Anzeige einer Fläche oder Oberfläche einer ersten Seite oder eines Teils davon der 3D-Form entspricht und die zweite Region einer Anzeige einer Fläche oder Oberfläche einer zweiten Seite oder eines Teils davon der 3D-Form entspricht, und wobei das Verwalten durch die Steuerung ferner Folgendes umfasst:
Stapeln, durch die Steuerung, von bewegten Elementen zu einem Stapel zur Anzeige in der zweiten Region; und
Ändern einer Anzeige der zu einem Stapel gestapelten Elemente zu einer Anzeige in einer ausgebreiteten Form als Reaktion auf eine Berührungseingabe in der zweiten Region.

2. Verfahren zum Bereitstellen einer Benutzerschnittstelle nach Anspruch 1, wobei das Bewegen von Elementen aus der Elementanzeigeregion (20) zu der zweiten Region das Anzeigen von Geisterbildern entsprechend den bewegten Elementen an zuvor angezeigten Positionen der bewegten Elemente beinhaltet, wobei jedes Geisterbild von dem jeweiligen entsprechenden Element, das bewegt worden ist, in Bezug auf zumindest eine Eigenschaft unterschieden wird, z. B. Größe, Farbe und/oder Transparenz, sodass jedes Geisterbild einfach von benachbarten Elementen in der Elementanzeigeregion (20) unterschieden werden kann.

3. Verfahren zum Bereitstellen einer Benutzerschnittstelle nach Anspruch 1 oder 2, wobei das Verwalten von zumindest einem Element durch die Steuerung ferner zumindest eines des Folgenden umfasst:
Bewegen einer Anzeige eines obersten der Elemente, die in der zweiten Region gestapelt sind, zu der Elementanzeigeregion (20), indem ein Kontakt auf einem Berührungsbildschirm an einer Position entsprechend den gestapelten Elementen erfasst wird, wobei das oberste Element zu einer gewünschten Position der Elementanzeigeregion (20) bewegt wird, indem eine Kontaktfreigabe auf dem Berührungsbildschirm entsprechend dem obersten der Elemente erfasst wird;
Anzeigen der Elemente, die in der zweiten Region gestapelt sind, in einer ausgebreiteten Form, wenn der Berührungsbildschirm ein Antippen der zweiten Region erfasst, ein Auswählen von einem der Elemente in einer ausgebreiteten Form und Bewegen des ausgewählten Elements zu der Elementanzeigeregion (20); und
Bewegen einer Anzeige aller Elemente, die in der zweiten Region gestapelt sind, zu der Elementanzeigeregion (20) als Reaktion auf einen ersten, z. B. "leeren", Befehl.

4. Verfahren zum Bereitstellen einer Benutzerschnittstelle nach Anspruch 3, wobei das Bewegen aller Elemente, die in der zweiten Region gestapelt sind, Folgendes umfasst:
Bewegen einer Anzeige von Elementen von der zweiten Region, deren vorherige Positionen in der Elementanzeigeregion (20) bekannt sind, zurück zu ihren vorherigen Positionen in der Elementanzeigeregion (20);
Bewegen der Anzeige von Elementen in der zweiten Region, deren vorherige Positionen in der Elementanzeigeregion (20) unbekannt sind, zu leeren Positionen in der Elementanzeigeregion (20); und
Hinzufügen einer Seite, wenn es keine leeren Positionen in der ersten Region gibt, und Bewegen der Anzeige von Elementen in der zweiten Region zu der hinzugefügten Seite.

5. Verfahren zum Bereitstellen einer Benutzerschnittstelle nach einem vorhergehenden Anspruch, wobei das Verwalten von zumindest einem Element durch die Steuerung Folgendes umfasst:
Entfernen, als Reaktion auf einen zweiten, z. B. Löschbefehl, von Anwendungen, die zumindest einem Element in der zweiten Region zugeordnet sind;
Erstellen, als Reaktion auf einen dritten, z. B. Ordnererstellungsbefehl, eines Ordners in der ersten Region, und Bewegen einer Anzeige aller Elemente in der zweiten Region zu dem erstellten Ordner in der ersten Region; und
Hinzufügen, als Reaktion auf einen vierten, z. B. Seitenerstellungsbefehl, einer Seite in der ersten Region, und Bewegen einer Anzeige aller Elemente in der zweiten Region zu der hinzugefügten Seite.

6. Verfahren zum Bereitstellen einer Benutzerschnittstelle nach einem vorhergehenden Anspruch, wobei die zweite Region ein erstes Element, z. B. "Ordner erstellen", das einer ersten Funktion zugeordnet ist, z. B. "Ordner erstellen", und ein zweites Element enthält, z. B. "Seite erstellen", das einer zweiten Funktion zugeordnet ist, z. B. "Seite erstellen".

7. Mobiles Endgerät (100) zum Bereitstellen einer Benutzerschnittstelle, umfassend:
einen Berührungsbildschirm (130), der konfiguriert ist, um, wenn eine Bearbeitungsfunktion von einem Startbildschirm initiiert wird, der eine Vielzahl von Elementen enthält, die auf einer oder mehreren Seiten angezeigt wird, einen dreidimensionalen Benutzerschnittstellenbildschirm, 3D-UI-Bildschirm, anzuzeigen, der eine erste Region, die eine Elementanzeigeregion (20) zum Anzeigen von Elementen des Startbildschirms umfasst, und eine zweite Region zur Elementverwaltung aufweist; und
eine Steuereinheit (110), die konfiguriert ist, um die Verwaltung von zumindest einem Element zu steuern, das in der zweiten Region angezeigt wird, wobei die Steuereinheit ferner konfiguriert ist, um ein Element, das in der Elementanzeigeregion (20) angezeigt wird, zu der zweiten Region als Reaktion auf eine Berührungseingabe an das Element zu bewegen, wobei der 3D-UI-Bildschirm als eine 3D-Form geformt ist, wobei die erste Region einer Fläche oder Oberfläche einer ersten Seite oder eines Teils davon der 3D-Form entspricht und die zweite Region einer Fläche oder Oberfläche einer zweiten Seite oder eines Teils davon der 3D-Form entspricht, und wobei die Steuereinheit ferner für Folgendes konfiguriert ist:
Stapeln von bewegten Elementen zu einem Stapel zur Anzeige in der zweiten Region; und
Ändern einer Anzeige der zu einem Stapel gestapelten Elemente zu einer Anzeige in einer ausgebreiteten Form als Reaktion auf eine Berührungseingabe in der zweiten Region.

8. Mobiles Endgerät (100) nach Anspruch 7, wobei die zweite Region ein erstes Element, z. B. "Ordner erstellen", das einer ersten Funktion zugeordnet ist, die in der Steuereinheit konfiguriert ist, z. B. "Ordner erstellen", und ein zweites Element enthält, z. B. "Seite erstellen", das einer zweiten Funktion zugeordnet ist, z. B. "Seite erstellen".

9. Mobiles Endgerät (100) nach Anspruch 7 oder 8, wobei die Steuereinheit konfiguriert ist, um, wenn ein Element, das in der ersten Region angezeigt wird, zu der zweiten Region bewegt wird, den Berührungsbildschirm zu steuern, um ein Geisterbild entsprechend dem bewegten Element an einer vorherigen Position des bewegten Elements anzuzeigen, wobei das Geisterbild von dem entsprechenden bewegten Element in Bezug auf zumindest eine Eigenschaft unterschieden wird, z. B. Größe, Farbe und/oder Transparenz, wodurch das Geisterbild einfach von benachbarten Elementen, die angezeigt werden, unterschieden werden kann.

10. Mobiles Endgerät nach Anspruch 7, wobei die Steuereinheit (110) für Folgendes konfiguriert ist:
Bewegen einer Anzeige von Elementen in der zweiten Region, deren vorherige Positionen in der ersten Region bekannt sind, zurück zu ihren vorherigen Positionen;
Bewegen einer Anzeige von Elementen in der zweiten Region, deren vorherige Positionen in der ersten Region unbekannt sind, zu leeren Positionen in der ersten Region zur Anzeige; und
Hinzufügen einer Seite, wenn es keine leere Position in der ersten Region gibt, und bewegt eine Anzeige von Elementen in der zweiten Region zu der hinzugefügten Seite.

11. Mobiles Endgerät (100) nach einem der Ansprüche 7 bis 10, wobei die Steuereinheit (110) für Folgendes konfiguriert ist:
Entfernen, als Reaktion auf einen ersten, z. B. Löschbefehl, einer Anzeige von Anwendungen, die zumindest einem Element in der zweiten Region zugeordnet sind,
Erstellen, als Reaktion auf einen zweiten, z. B. Ordnererstellungsbefehl, eines Ordners in der ersten Region, und bewegt eine Anzeige aller Elemente in der zweiten Region zu dem erstellten Ordner, und
Hinzufügen, als Reaktion auf einen dritten, z. B. Seitenerstellungsbefehl, einer Seite in der ersten Region, und bewegt eine Anzeige aller Elemente in der zweiten Region zu der hinzugefügten Seite.

## Revendications

1. Procédé de présentation d'une interface d'utilisateur pour un terminal mobile (100), comprenant :
l'affichage sur un écran tactile (130) du terminal mobile (100), quand une fonction d'édition est initiée depuis un écran d'accueil contenant une pluralité d'éléments affichés sur une ou plusieurs pages, un écran d'interface d'utilisateur en trois dimensions, écran UI 3D, ayant une première zone comprenant une zone d'affichage d'éléments (20) destinée à afficher des éléments de l'écran d'accueil et une deuxième zone pour la gestion d'éléments ; et
la gestion par une unité de commande d'au moins un élément affiché dans la deuxième zone, dans lequel le procédé comprend en outre le déplacement d'un élément affiché dans la zone d'affichage d'éléments (20) vers la deuxième zone en réponse à une entrée de toucher sur l'élément, dans lequel l'écran UI 3D est affiché dans une forme 3D, la première zone correspondant à un affichage d'un premier côté, face ou surface, ou partie de celui-ci, de la forme 3D, et la deuxième zone correspondant à un affichage d'un deuxième côté, face ou surface, ou partie de celui-ci, de la forme 3D, et dans lequel la gestion par l'unité de commande comprend en outre :
l'empilement par l'unité de commande des éléments déplacés dans une pile pour affichage dans la deuxième zone ; et
le changement d'un affichage des éléments empilés dans une pile vers un affichage dans une forme déployée, en réponse à une entrée de toucher sur la deuxième zone.

2. Procédé de présentation d'une interface d'utilisateur selon la revendication 1, dans lequel le déplacement d'éléments depuis la zone d'affichage d'éléments (20) vers la deuxième zone inclut l'affichage d'images fantôme correspondant aux élément déplacés à des emplacements précédemment affichés des éléments déplacés, dans lequel chaque image fantôme se distingue de l'élément correspondant respectif qui a été déplacé en termes d'au moins une caractéristique, par exemple, taille, couleur, et/ou transparence, de sorte que chaque image fantôme puisse se distinguer facilement d'éléments voisins dans la zone d'affichage d'éléments (20).

3. Procédé de présentation d'une interface d'utilisateur selon la revendication 1 ou 2, dans lequel la gestion d'au moins un élément par l'unité de commande comprend en outre au moins l'un parmi :
le déplacement d'un affichage d'un élément tout en haut des éléments empilés dans la deuxième zone vers la zone d'affichage d'éléments (20) en détectant un contact sur l'écran tactile à un emplacement correspondant aux éléments empilés, dans lequel l'élément tout en haut est déplacé vers un emplacement souhaité de la zone d'affichage d'éléments (20) en détectant une libération du contact sur l'écran tactile correspondant audit celui tout en haut des éléments ;
l'affichage des éléments empilés dans la deuxième zone dans une forme déployée quand l'écran tactile détecte un tapement de la deuxième zone, une sélection de l'un des éléments dans une forme déployée, et un déplacement de l'élément sélectionné vers la zone d'affichage d'éléments (20) ; et
le déplacement d'un affichage de tous les éléments empilés sur la deuxième zone vers la zone d'affichage d'éléments (20) en réponse à une première commande, par exemple « vider ».

4. Procédé de présentation d'une interface d'utilisateur selon la revendication 3, dans lequel le déplacement de tous les éléments empilés sur la deuxième zone comprend :
le déplacement d'un affichage d'éléments depuis la deuxième zone dont les précédents emplacements dans la zone d'affichage d'éléments (20) sont connus, pour les ramener vers leurs précédents emplacements dans la zone d'affichage d'éléments (20) ;
le déplacement de l'affichage d'éléments dans la deuxième zone dont les précédents emplacements dans la zone d'affichage d'éléments (20) sont inconnus vers des emplacements vides dans la zone d'affichage d'éléments (20) ; et
l'ajout, quand il n'y a pas d'emplacement vide dans la première zone, d'une page, et le déplacement de l'affichage des éléments dans la deuxième zone vers la page ajoutée.

5. Procédé de présentation d'une interface d'utilisateur selon l'une quelconque revendication précédente, dans lequel la gestion d'au moins un élément par l'unité de commande comprend la suppression, en réponse à une deuxième commande, par exemple « supprimer », d'applications associées à au moins un élément dans la deuxième zone ;
la création, en réponse à une troisième commande, par exemple « créer dossier » d'un dossier dans la première zone, et le déplacement d'un affichage de tous les éléments dans la deuxième zone vers le dossier créé dans la première zone ; et
l'ajout, en réponse à une quatrième commande, par exemple « créer page » d'une page au niveau de la première zone, et le déplacement d'un affichage de tous les éléments dans la deuxième zone vers la page ajoutée.

6. Procédé de présentation d'une interface d'utilisateur selon l'une quelconque revendication précédente, dans lequel la deuxième zone contient un premier élément, par exemple « créer dossier », associé à une premier fonction, par exemple « créer dossier », et un deuxième élément, par exemple « créer page », associé à une deuxième fonction, par exemple « créer page ».

7. Terminal mobile (100) destiné à présenter une interface d'utilisateur, comprenant :
un écran tactile (130) configuré pour afficher, quand une fonction d'édition est initiée depuis un écran d'accueil contenant une pluralité d'éléments affichés sur une ou plusieurs pages, un écran d'interface d'utilisateur en trois dimensions, écran UI 3D, ayant une première zone comprenant une zone d'affichage d'éléments (20) destinée à afficher des éléments de l'écran d'accueil et une deuxième zone pour la gestion d'éléments ; et
une unité de commande (110) configurée pour commander la gestion d'au moins un élément affiché dans la deuxième zone, dans lequel l'unité de commande est en outre configurée pour déplacer un élément affiché dans la zone d'affichage d'éléments (20) vers la deuxième zone en réponse à une entrée de toucher sur l'élément, dans lequel l'écran UI 3D est affiché en tant que forme 3D, la première zone correspondant à un premier côté, face ou surface, ou partie de celui-ci, de la forme 3D, et la deuxième zone correspondant à un deuxième côté, face ou surface, ou partie de celui-ci, de la forme 3D, et dans lequel l'unité de commande est en outre configurée pour empiler des éléments déplacer dans une pile pour affichage dans la deuxième zone ; et
changer un affichage des éléments empilés dans une pile vers un affichage dans un forme déployée, en réponse à une entrée de toucher sur la deuxième zone.

8. Terminal mobile (100) selon la revendication 7, dans lequel la deuxième zone contient un premier élément, par exemple « créer dossier », associé à une première fonction, par exemple « créer dossier » configurée dans l'unité de commande et un deuxième élément, par exemple « créer page », associé à une deuxième fonction, par exemple « créer page ».

9. Terminal mobile (100) selon la revendication 7 ou 8, dans lequel l'unité de commande est configurée pour commander, quand un élément affiché dans la première zone est déplacé vers la deuxième zone, à l'écran tactile d'afficher une image fantôme correspondant à l'élément déplacé au niveau d'un emplacement précédent de l'élément déplacé, dans lequel l'image fantôme se distingue de l'élément déplacé correspondant en termes d'au moins une caractéristique, par exemple, taille, couleur, et/ou transparence, dans lequel l'image fantôme se distingue facilement d'éléments voisins étant affichés.

10. Terminal mobile selon la revendication 7, dans lequel l'unité de commande (110) est configurée pour :
déplacer un affichage d'éléments dans la deuxième zone dont les précédents emplacements dans la première zone sont connus, pour les ramener vers leurs précédents emplacements, déplacer un affichage d'éléments dans la deuxième zone dont les précédents emplacements dans la première zone sont inconnus vers des emplacements vides dans la première zone d'affichage, et ajouter, quand il n'y a pas d'emplacement vide dans la première zone, une page, et déplacer un affichage d'éléments dans la deuxième zone vers la page ajoutée.

11. Terminal mobile (100) selon l'une quelconque des revendications 7 à 10, dans lequel l'unité de commande (110) est configurée pour :
supprimer, en réponse à une première commande, par exemple « supprimer », un affichage d'applications associées à au moins un élément dans la deuxième zone, créer, en réponse à une deuxième commande, par exemple « créer dossier » un dossier au niveau de la première zone, et déplacer un affichage de tous les éléments dans la deuxième zone vers le dossier créé, et ajouter, en réponse à une troisième commande, par exemple « créer page », une page au niveau de la première zone, et déplacer un affichage de tous les éléments dans la deuxième zone vers la page ajoutée.
